# DEMANDE DE BREVET EUROPEEN

(11) **EP 2 290 341 A1**
(43) Date de publication de la demande: **02.03.2011**
(21) Numéro de dépôt: 10305915.0
(22) Date de dépôt: 25.08.2010
(51) Int. Cl.: G01J 5/00, F24F 11/00, G08B 13/193

(54) **Dispositif de détection de mouvement**

(30) Priorité: 26.08.2009 FR 0955801
(71) Demandeur: Atlantic Industrie, 85000 La Roche sur Yon (FR)
(72) Inventeur: Bony, Yves, 85170 DOMPIERRE SUR YON (FR)
(74) Mandataire: Laget, Jean-Loup

(57) **Abrégé**

Un dispositif de détection de mouvement comporte une lentille optique (6) et un capteur (8) passif infrarouge.

Une interface (7) électriquement isolante et transparente au rayonnement infrarouge est montée entre la lentille (6) et le capteur (8).

L'interface (7) électriquement isolante et transparente au rayonnement infrarouge est réalisée de préférence en polyéthylène haute densité (PEHD) et présente une épaisseur comprise entre 10 et 200 micromètres.

## Description

L'invention est relative à un dispositif de détection de mouvement, notamment pour commander le chauffage de locaux domestiques ou industriels.
L'invention est particulièrement utile pour équiper des appareils de chauffage, de manière à adapter l'émission de chauffage à l'absence de personnes dans les locaux, pour réaliser une économie d'énergie tout en limitant la perte de confort.
L'invention est également relative à un appareil de chauffage de locaux domestiques ou industriels intégrant un dispositif selon l'invention.
On connaît des capteurs de mouvement passifs à infrarouge, qui détectent le mouvement des corps chauds en déplacement. Ces capteurs de petites dimensions sont avantageusement constitués sous forme de composants montables en surface et présentent une coque hémisphérique formant lentille de Fresnel.
Les détecteurs de mouvement peuvent comporter un filtre contre les bruits électriques et présenter une sortie de commande sur bomier relais.
Les capteurs et détecteurs connus de mouvement donnent généralement satisfaction, mais présentent l'inconvénient d'une isolation électrique insuffisante pour en permettre l'intégration dans des appareils de chauffage.
En effet, les appareils de chauffage électrique doivent comporter une double isolation électrique ou un isolement de classe 2, pour lesquels les capteurs et détecteurs connus de mouvement ne sont pas prévus.
Un premier but de l'invention est de permettre l'intégration des capteurs pyroélectriques connus dans un appareil de chauffage électrique.
Un deuxième but de l'invention est de perfectionner les capteurs pyroélectriques passifs à infrarouge pour en améliorer les caractéristiques d'isolement particulièrement avec l'utilisation de ces capteurs en boitier montage en surface (CMS).

L'invention a pour objet un dispositif de détection de mouvement, du type comportant une lentille optique et un capteur passif infrarouge, caractérisé par le fait qu'une interface de feuille souple électriquement isolante et transparente au rayonnement infrarouge est montée entre la lentille et le capteur et par le fait que l'interface électriquement isolante et transparente au rayonnement infrarouge présente une épaisseur comprise entre 10 et 200 micromètres.

Selon d'autres caractéristiques alternatives de l'invention :
- l'interface de feuille souple est une étiquette autocollante sur une face, collée sur le capteur passif infrarouge pour en minimiser la perte de sensibilité
- La lentille optique est constituée en coque hémisphérique façonnée en lentille de Fresnel.
- La lentille optique est fabriquée en polyéthylène haute densité (PEHD).
- Le capteur est constitué en composant montable en surface (CMS).
- Le capteur est monté sur un circuit imprimé constituant une électronique de contrôle.

L'invention a également pour objet un appareil de chauffage électrique comportant un dispositif selon l'invention.

Selon, d'autres caractéristiques alternatives de l'invention :
- La lentille optique est montée dépassante de l'enveloppe de l'appareil de chauffage électrique.
- Le capteur est monté à l'intérieur de l'enveloppe avec double isolement électrique et mécanique.
- L'interface électriquement isolante et transparente au rayonnement infrarouge est solidarisée de manière étanche à l'enveloppe de l'appareil de chauffage électrique.

L'invention sera mieux comprise grâce à la description qui va suivre donnée à titre d'exemple non limitatif en référence aux dessins annexés dans lesquels :
La figure 1 représente schématiquement un appareil de chauffage électrique intégrant un dispositif selon l'invention.
La figure 2 représente schématiquement une vue en coupe d'un dispositif selon l'invention.

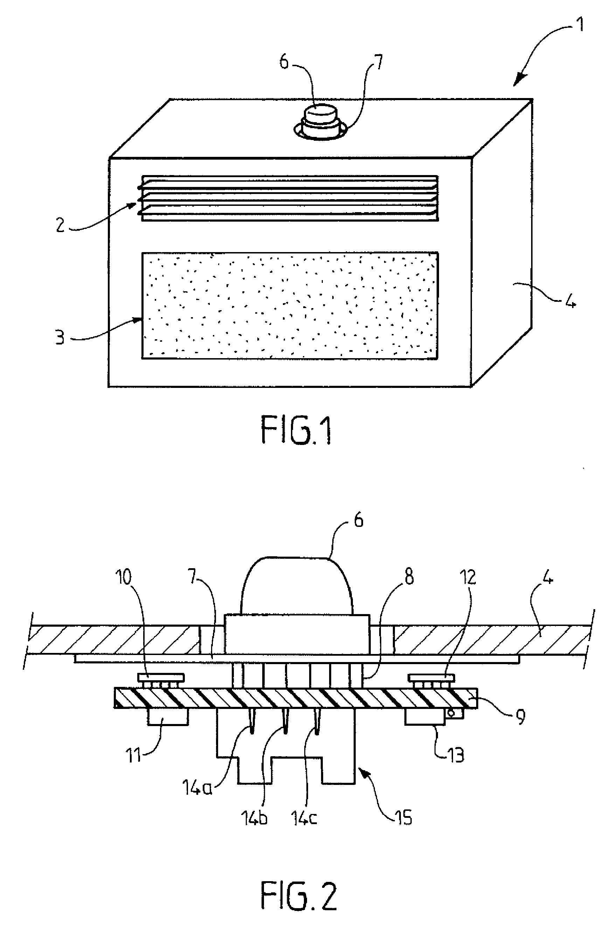

En référence aux figures 1 et 2, les éléments identiques ou fonctionnellement équivalents sont repérés par des chiffres de référence identiques.

Sur la figure 1, un appareil 1 de chauffage électrique selon l'invention comporte des ailettes 2 de sortie d'air chaud, un panneau radiant 3 diffusant et un corps de chauffe non représenté contenu dans une enveloppe 4 métallique et intègre un capteur pyroélectrique comportant une lentille 6 dépassant de la face supérieure de l'enveloppe 4 sans exposer de parties conductrices hors de l'enveloppe 4.
La lentille 6 est de préférence constituée en coque hémisphérique façonnée en lentille de Fresnel et fabriquée en polyéthylène haute densité (PEHD).
Cette lentille 6 focalise le rayonnement infrarouge ambiant sur un capteur pyroélectrique monté en surface d'un circuit imprimé constituant l'électronique de contrôle.
Généralement, l'électronique de contrôle est isolée de l'alimentation électrique du secteur par un transformateur ferromagnétique à 50 Hz ou par un transformateur à découpage à haute fréquence d'alimentation.
Grâce à l'invention, l'isolation électrique par rapport à l'alimentation électrique du secteur peut être supprimée et remplacée par un double isolement électrique et mécanique, qui permet de relier les parties électriquement conductrices directement à la phase et au neutre de l'alimentation secteur.
A cet effet, on sépare la coque formant lentille par une interface 7 de feuille souple électriquement isolante transparente au rayonnement infrarouge.
Pour respecter les normes de double isolation, cette feuille transparente au rayonnement infrarouge humain est un excellent isolant électrique supportant au moins 3000 VAC RMS.

De préférence, l'interface 7 de feuille souple est une étiquette autocollante sur une face, réalisée à partir d'une feuille adhésive en polyéthylène haute densité (PEHD) d'épaisseur comprise entre 10 et 200 micromètres.
De préférence également, l'interface 7 de feuille souple est collée sur le capteur pyroélectrique pour en minimiser la perte de sensibilité.
L'interface 7 de feuille souple se conforme automatiquement à la forme du capteur pyroélectrique lors de l'insertion de la lentille, grâce à la souplesse et à la faible épaisseur de la feuille adhésive à partir de laquelle l'interface 7 de feuille souple est réalisée.

Grâce à l'invention, la sécurité des utilisateurs de l'appareil de chauffage électrique est améliorée par le double isolement électrique et mécanique procurant une meilleure fiabilité que les transformateurs d'isolation de l'art antérieur.
En outre, le dispositif selon l'invention présente un poids et un encombrement plus faibles par rapport à l'art antérieur et se révèle plus économique à mettre en oeuvre. Sur la figure 2, un dispositif selon l'invention comporte une coque 6 formant lentille, une interface 7 électriquement isolante et transparente au rayonnement infrarouge et un capteur 8 pyroélectrique.
L'interface 7 est collée à l'enveloppe 4 d'un appareil de chauffage électrique pour réaliser une jonction étanche.
L'interface 7 est montée en sandwich entre la lentille 6 et le capteur 8 infrarouge passif.
Le capteur pyroélectrique 8 est un composant monté en surface d'une plaquette 9 de circuit imprimé.
La plaquette 9 de circuit imprimé porte plusieurs composants 10, 11, 12, 13 des broches de sortie 14a, 14b, 14c et une fiche 15 de connexion.
Le circuit imprimé 9 portant le capteur 8 pyroélectrique et les éléments 10 à 15 constitue une électronique de contrôle apte à piloter l'appareil de chauffage électrique en fonction de l'absence ou de la présence de personnes dans les locaux domestiques ou industriels à chauffer.
Cette électronique de contrôle est isolée et entièrement contenue dans l'enveloppe 4 de l'appareil de chauffage électrique.
L'invention décrite en référence à un mode de réalisation particulier n'y est nullement limitée, mais couvre au contraire toute modification de forme et toute variante de réalisation dans le cadre et l'esprit de l'invention.

## Revendications

1. Dispositif de détection de mouvement, du type comportant une lentille optique (6) et un capteur (8) passif infrarouge, **caractérisé par le fait qu'**une interface (7) de feuille souple électriquement isolante et transparente au rayonnement infrarouge est montée entre la lentille (6) et le capteur (8) et **par le fait que** l'interface (7) de feuille souple électriquement isolante et transparente au rayonnement infrarouge présente une épaisseur comprise entre 10 et 200 micromètres.

2. Dispositif selon la revendication 1, **caractérisé par le fait que** l'interface (7) de feuille souple est une étiquette autocollante sur une face, collée sur le capteur (8) passif infrarouge pour en minimiser la perte de sensibilité

3. Dispositif selon la revendication 1, **caractérisé par le fait que** la lentille optique (6) est constituée en coque hémisphérique façonnée en lentille de Fresnel.

4. Dispositif selon la revendication 1 ou la revendication 2, **caractérisé par le fait que** la lentille optique (6) est fabriquée en polyéthylène haute densité (PEHD).

5. Dispositif selon la revendication 1, **caractérisé par le fait que** le capteur (8) est constitué en composant classique traversant ou montable en surface (CMS) suivant les besoins industriels de la carte.

6. Dispositif selon la revendication 4, **caractérisé par le fait que** le capteur (8) est monté sur un circuit imprimé constituant une électronique de contrôle.

7. Appareil de chauffage électrique comportant un dispositif de détection de mouvement, du type comportant une lentille optique (6) et un capteur (8) passif infrarouge, **caractérisé par le fait qu'**une interface (7) de feuille souple électriquement isolante et transparente au rayonnement infrarouge est montée entre la lentille (6) et le capteur (8) et **par le fait que** l'interface (7) de feuille souple électriquement isolante et transparente au rayonnement infrarouge présente une épaisseur comprise entre 10 et 200 micromètres.

8. Appareil selon la revendication 7, **caractérisé par le fait que** la lentille optique (6) est montée dépassante de l'enveloppe (4) de l'appareil de chauffage électrique.

9. Appareil selon la revendication 7 ou la revendication 8, **caractérisé par** la fait que le capteur (8) est monté à l'intérieur de l'enveloppe (4) assurant la double isolation électrique

10. Appareil selon l'une quelconque des revendications 7 à 9, **caractérisé par le fait que** l'interface (7) électriquement isolante et transparente au rayonnement infrarouge est solidarisée de manière étanche à l'enveloppe (4) de l'appareil de chauffage électrique.
